# FASCICULE DE BREVET EUROPEEN

(11) **EP 3 455 146 B1**
(45) Date de publication et mention de la délivrance du brevet: **08.07.2020**
(21) Numéro de dépôt: 17730838.4
(22) Date de dépôt: 11.05.2017
(51) Int. Cl.: B65D 83/38, B65D 83/42, B65D 83/54

(54) **BAGUE POUR DISPOSITIF DE DISTRIBUTION DE PRODUIT FLUIDE**
RING FÜR EINE FLUIDAUSGABEVORRICHTUNG
RING FOR A FLUID DISPENSING DEVICE

(30) Priorité: 13.05.2016 FR 1654307
(43) Date de publication de la demande: 20.03.2019
(73) Titulaire: APTAR France SAS, 27110 Le Neubourg (FR)
(72) Inventeur: DESCHAMPS, Olivier, 27610 Romilly Sur Andelle (FR); PIAZZONI, Eric, 27370 Saint Cyr La Campagne (FR)
(74) Mandataire: CAPRI
(86) Numéro de dépôt international: PCT/FR2017/051130
(87) Numéro de publication internationale: WO 2017/194887

(56) Documents cités:
- EP-A1- 1 065 156
- WO-A1-2011/012804
- WO-A1-2012/136927
- FR-A1- 2 792 295
- FR-A1- 2 840 890
- JP-A- 2004 202 410
- US-A- 5 697 532

## Description

La présente invention concerne une bague pour valve de distribution de produit fluide et un dispositif de distribution de produit fluide comportant une telle bague.

Il est connu d'utiliser des bagues avec des valves de distribution aérosol, notamment des valves doseuses, montées sur un réservoir contenant le produit à distribuer. Ces bagues s'utilisent notamment dans les valves utilisables en position inversée, c'est-à-dire avec la valve disposée en-dessous du réservoir au moment de l'expulsion d'une dose de produit. Ces bagues remplissent généralement principalement deux fonctions, à savoir d'une part d'assurer la distribution d'une quantité maximale du produit contenu à l'intérieur du réservoir, en limitant le volume mort situé sous l'entrée de la valve lorsque celle-ci est en position inversée d'utilisation. D'autre part, les bagues servent aussi à limiter le contact du produit avec le joint de col disposé généralement entre le col du réservoir et la bague ou capsule de fixation, qui sert à fixer la valve sur le récipient. En limitant le contact entre le joint et le produit contenu dans le réservoir, on limite les risques de contamination du produit par les extractibles susceptibles d'être relargués par ledit joint, et on limite la détérioration du joint en raison de son contact avec le produit, notamment le gaz propulseur.

En général, la bague est assemblée sur le corps de valve par un serrage radial d'un bord interne de la bague sur ledit corps de valve. Cette mise en œuvre présente l'inconvénient que lorsque ce serrage radial est trop fort, il peut au cours du temps induire une déformation du corps de valve, et notamment à l'intérieur dudit corps, ce qui peut entraîner un dysfonctionnement de la valve. En effet, de nombreuses valves prévoient un espace relativement étroit entre la soupape qui coulisse et le corps de valve. Des déformations radiales du corps de valve peuvent alors entraîner un frottement et même un blocage de ladite soupape. De même, pour remplir efficacement les deux fonctions susmentionnées, la bague est généralement en contact, pas nécessairement étanche, par sa partie externe avec une partie du col du réservoir. En particulier lorsque la capsule de fixation est une capsule sertissable, ce sertissage provoque une déformation radiale du col du réservoir, augmentant d'autant la compression radiale exercée sur la bague. A nouveau, cette augmentation de la compression radiale transmise au bord interne de la bague peut provoquer une augmentation des contraintes exercées sur le corps de valve et une déformation de celui-ci.

Le document WO2007074274 décrit une bague qui comporte une paroi déformable pour limiter les contraintes sur le corps de valve, et qui permet aussi de limiter les contacts du produit fluide avec le joint de col. Cette bague permet de résoudre en partie les problèmes susmentionnés.

Le document WO2012136927 décrit une bague réalisée d'une seule pièce monobloc comportant une bride radiale formant joint de col, ladite bague étant réalisée en un matériau comportant du COC élastomère. Cette bague présente notamment l'inconvénient d'être réalisée entièrement en un matériau relativement souple, ce qui peut rendre plus difficile sa fabrication et son assemblage. De plus, le COC élastomère est un matériau relativement cher.

Les documents EP1065156, US5697532, FR2865198, FR2840890, FR2792295, WO2011012804, JP2004202410 et DE102005002444 décrivent d'autres dispositifs de l'art antérieur.

La présente invention a pour but de fournir une bague pour dispositif de distribution de produit fluide qui ne reproduit pas les inconvénients susmentionnés, et qui notamment améliore la bague du document WO2012136927.

Plus particulièrement, la présente invention a pour but de fournir une bague pour dispositif de distribution d'aérosol qui évite toute contrainte radiale excessive sur le corps de valve, évitant ainsi tout risque de déformation excessive du corps de valve, en particulier lors du sertissage de la valve sur le réservoir.

La présente invention a également pour but de fournir une telle bague qui permette de compenser les tolérances de fabrication sans augmenter les contraintes radiales sur le corps de valve.

La présente invention a encore pour but de fournir une telle bague qui assure une vidange maximale du contenu du réservoir.

La présente invention a également pour but de fournir une telle bague qui limite le plus possible les interactions avec le produit et le gaz propulseur contenus dans le réservoir.

La présente invention a également pour but de fournir une dispositif de distribution de produit fluide qui soit simple et peu coûteux à fabriquer et à assembler, en diminuant notamment le nombre de pièces constitutives du dispositif de distribution de produit fluide.

La présente invention a donc pour objet une bague destinée à être disposée autour d'un corps de valve d'une valve de distribution de produit fluide montée, au moyen d'une capsule de fixation, tel qu'une capsule sertissable, sur un réservoir contenant du produit à distribuer, ladite bague comportant:
- une pièce monobloc comportant au moins une partie interne coopérant avec ledit corps de valve, une bride radiale formant joint de col qui s'étend entre le col du réservoir et la capsule de fixation, et au moins un évidement axial s'étendant au moins partiellement autour de la périphérie de ladite bague, radialement à l'intérieur de ladite bride radiale, ladite pièce monobloc étant réalisée en un premier matériau sensiblement déformable, et
- au moins un insert de remplissage remplissant au moins partiellement ledit au moins un évidement axial, ledit au moins un insert de remplissage étant réalisé en un second matériau plus rigide que ledit premier matériau, ledit au moins un insert de remplissage étant surmoulé sur ladite pièce monobloc.

Avantageusement, ladite pièce monobloc comporte une première partie radialement interne coopérant avec une partie du corps de valve et une seconde partie interne coopérant avec une autre partie du corps de valve.

Avantageusement, ladite première partie radialement interne comporte une lèvre déformable.

Avantageusement, ladite pièce monobloc comporte un seul évidement axial périphérique.

Avantageusement, la bague comporte un seul insert de remplissage remplissant en totalité ledit évidement axial.

En variante, ladite pièce monobloc comporte une pluralité d'évidements axiaux séparés par des nervures radiales.

Avantageusement, ladite pièce monobloc comprend un copolymère élastomère ayant une température de transition vitreuse comprise entre - 10°C et 15 °C, une température de fusion cristalline comprise entre 50°C et 120°C, une cristallinité en poids comprise entre 5% et 40% et une teneur en norbornène comprise entre 2 et 15 mol%.

Avantageusement, ladite pièce monobloc comprend du COC élastomère.

Avantageusement, ledit second matériau comprend du polyamide, du polypropylène et/ou du polyéthylène.

Avantageusement, ledit au moins un insert de remplissage est coloré différemment de ladite pièce monobloc.

Avantageusement, ledit au moins un évidement axial est traversant, ledit au moins un insert étant exposé sur les côtés axialement supérieur et inférieur de ladite pièce monobloc.

En variante, ledit au moins un évidement axial est borgne, ledit au moins un insert étant exposé uniquement sur le côté axialement supérieur de ladite pièce monobloc.

La présente invention a aussi pour objet un dispositif de distribution de produit fluide comportant un réservoir, contenant du produit à distribuer et un gaz propulseur, notamment du type HFA, et une valve aérosol, comportant une bague telle que décrite ci-dessus.

Avantageusement, ledit corps de valve comporte au moins une ouverture pour permettre le passage de produit du réservoir dans ladite valve, ladite première partie radialement interne étant située au niveau du bord inférieur de ladite ouverture, en position d'utilisation inversée, avec la valve disposée sous ledit réservoir.

Ces caractéristiques et avantages et d'autres de la présente invention apparaîtront plus clairement au cours de la description détaillée suivante, faite en référence aux dessins joints, donnés à titre d'exemples non limitatifs, et sur lesquels :
- la figure 1 est une vue schématique en section transversale d'un dispositif de distribution d'aérosol comportant une bague selon un premier mode de réalisation avantageux de la présente invention, en position droite de stockage ;
- la figure 2 est une vue schématique en section transversale d'un dispositif de distribution d'aérosol comportant une bague selon un autre mode de réalisation avantageux de la présente invention, en position droite de stockage;
- la figure 3 et une vue schématique en perspective de la bague de la figure 1, vue de dessus;
- la figure 4 est une vue similaire à celle de la figure 3, vue de dessous;
- la figure 5 est une vue similaire à celle de la figure 3, montrant un autre mode de réalisation de la bague vue de dessus; et
- la figure 6 est une vue similaire à celle de la figure 5, vue de dessous.

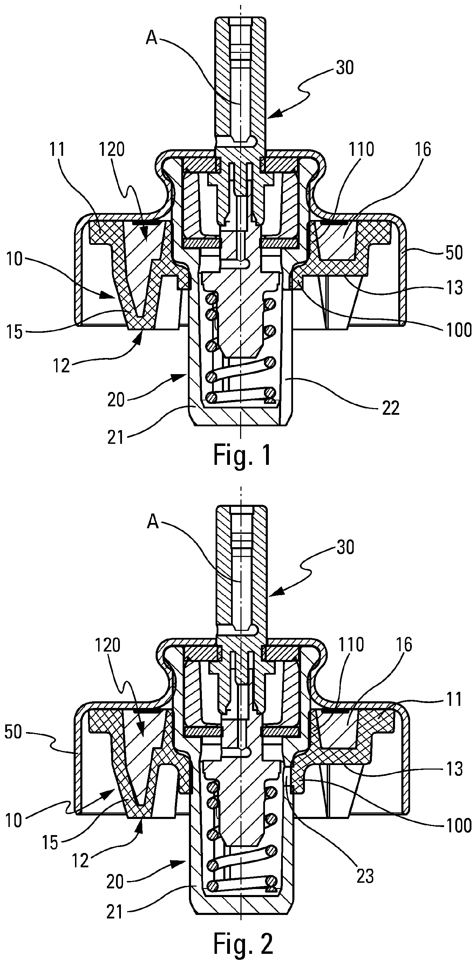

Dans la description, les termes "axial", "radial", "supérieur", "inférieur", "dessus" et "dessous" se réfèrent à l'axe longitudinal A et à la position droite du dispositif représentés sur les figures 1 et 2.

En référence plus particulièrement à la figure 1, le dispositif aérosol comporte un réservoir (non représenté) contenant le produit à distribuer. Le réservoir peut notamment être du type bidon classique, comme illustré dans le document WO2012136927.

Le produit à distribuer peut être du type pharmaceutique, et du gaz propulseur, tel qu'un gaz du type HFA, peut être prévu pour distribuer ce produit à travers une valve aérosol 20, de préférence une valve doseuse.

Cette valve aérosol comporte un corps de valve 21 dans lequel coulisse une soupape 30. Le corps de valve 21 est assemblé sur le col du réservoir au moyen d'une capsule de fixation 50, notamment du type sertissable, avec interposition d'un joint de col pour réaliser l'étanchéité. La valve est représentée sur la figure 1 dans sa position de stockage, qui est la position droite, c'est-à-dire que la valve est située au-dessus du réservoir.

Le corps de valve 21 comporte une ou plusieurs ouverture(s) 22 permettant de remplir, notamment par gravité, la valve avec du produit à partir du réservoir. Ces ouvertures sont représentées sur la figure 1 sous la forme de fentes longitudinales latérales 22 s'étendant sur une partie de la hauteur du corps de valve 21. En variante, une ou plusieurs ouverture(s) de formes différentes pourraient être prévues à cet effet, par exemple un ou plusieurs trous.

Comme représenté sur la figure 2, le corps de valve pourrait aussi comporter une ou plusieurs ouvertures de remplissage 23 servant au remplissage du réservoir avec le produit fluide à travers ladite valve.

Une bague 10 est assemblée autour du corps de valve 21. Cette bague 10 est destinée en particulier à assurer la vidange la plus complète possible du réservoir, en limitant au maximum le volume mort situé en-dessous du bord inférieur de la ou des ouverture(s) 22 du corps de valve 21, lorsque la valve est en position d'utilisation inversée.

La bague 10 comporte une pièce monobloc 15 formant une bride radiale 11 qui forme le joint de col interposé entre le col du réservoir et la capsule de fixation 50. L'invention permet donc de supprimer une pièce, à savoir le joint de col, ce qui simplifie la fabrication et l'assemblage du dispositif.

Un avantage de la bride radiale 11 formant joint de col est qu'après assemblage, la bague 10 ne peut pas glisser le long du corps de valve 21 puisque ladite bride radiale 11 est maintenue entre le col du réservoir et la capsule 50. Eventuellement, des bossages pourraient être formés sur la surface supérieure de la bride radiale 11 formant joint de col, pour améliorer l'étanchéité avec la surface inférieure de la capsule 50.

La pièce monobloc 15 de la bague 10 comporte au moins une première partie radialement interne 100 destinée à coopérer avec le corps de valve 21. De préférence, la première partie radialement interne 100 est la partie radialement la plus interne de la bague 10. Avantageusement, une seconde partie interne 110 peut être prévue pour coopérer avec une autre partie du corps de valve. Cette mise en œuvre permet de répartir les contraintes radiales exercées par la bague 10 sur le corps de valve 21 en deux zones de contact au lieu d'une, ce qui d'une part limite les contraintes radiales exercées individuellement sur chacune desdites zones, et d'autre part permet d'éviter substantiellement tout glissement de la bague 10 sur le corps 21, celle-ci étant serrée sur celui-ci en deux endroits distincts.

La première partie radialement interne 100 peut avantageusement comporter une lèvre déformable qui peut former un contact sensiblement étanche avec le corps de valve 21. Ainsi, sans exercer de fortes contraintes radiales sur le corps de valve, la première partie interne 100 de la bague 10 peut coopérer de manière sensiblement étanche avec ledit corps de valve 21.

Avantageusement, la première partie radialement interne est située au niveau du bord inférieur de ladite au moins une ouverture 22, en position d'utilisation inversée, avec la valve disposée sous ledit réservoir.

La bague 10 peut comporter une ou plusieurs, avantageusement trois, projections axiales 12, qui s'étendent vers l'intérieur du réservoir. Ces projections axiales 12 peuvent être réparties autour de la périphérie et séparées par des vides 13.

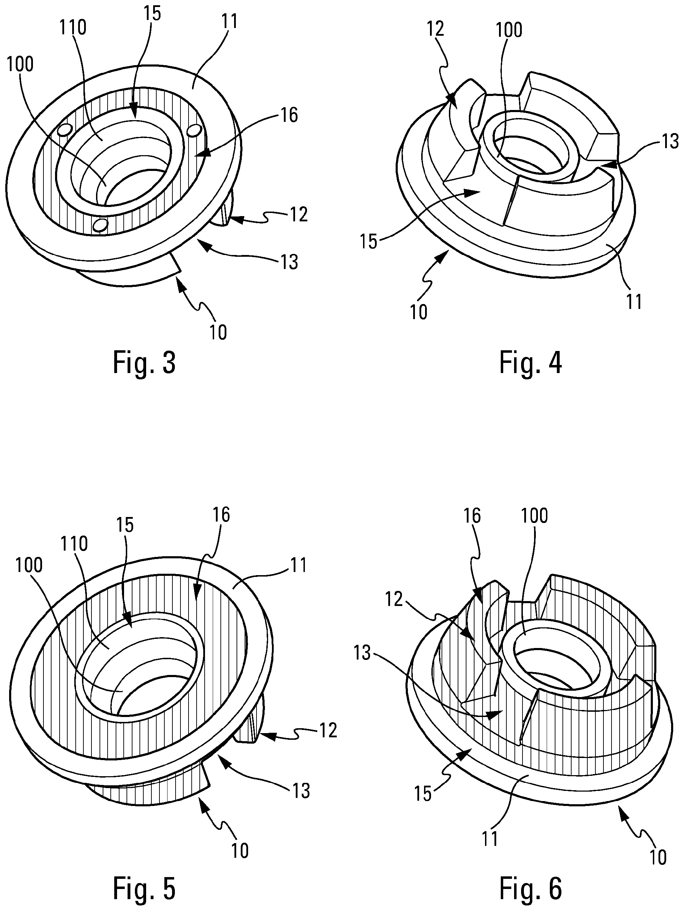

Dans l'exemple représenté sur la figure 4, les projections axiales 12 sont plus larges que les vides 13. Il est toutefois à noter que la largeur de ces vides 13 peut être égale voire supérieure à la largeur des projections axiales 12.

La pièce monobloc 15 de la bague 10 réalise l'étanchéité en tant que joint de col tout en étant au contact du produit contenu dans le réservoir. Le matériau utilisé pour réaliser la pièce monobloc 15 doit donc présenter des propriétés lui permettant simultanément d'assurer une fonction d'étanchéité sans avoir d'interactions néfastes avec le produit et/ou le gaz propulseur contenu dans le réservoir. En particulier, un matériau relativement déformable ou souple est préconisé.

Un matériau particulièrement adapté pour réaliser la pièce monobloc 15 de la bague est le COC élastomère. Avantageusement, le COC élastomère forme le seul matériau de base, mais on pourrait envisager de réaliser un alliage de COC élastomère avec un ou plusieurs autres matériaux, notamment ceux listés ci-après.

Le COC est un copolymère formulé avec un cycle norbornène et du polyéthylène. Le norbornène est issu de la synthèse d'éthylène et d'un cyclopentadiène.

Le COC classique est un matériau substantiellement rigide.

Le COC élastomère est alors un COC où la part de polyéthylène est plus importante, ce qui confère des propriétés élastomériques audit matériau.

Le COC élastomère n'est donc pas un mélange ou un alliage de COC classique avec un matériau élastomère, mais un matériau en tant que tel, qui présentent certaines propriétés similaires aux élastomères.

Le COC élastomère est un matériau ayant une température de transition vitreuse comprise entre - 10°C et 15 °C, une température de fusion cristalline comprise entre 50°C et 120°C, une cristallinité en poids comprise entre 5% et 40% et une teneur en norbornène comprise entre 2 et 15 mol%.

Les avantages du COC élastomère sont nombreux.

D'une part, il présente une nature chimique très neutre car, contrairement aux autres matériaux élastomères, il ne comporte pas de double liaison ouverte ou disponible susceptible de réagir.

Le COC élastomère a également un niveau d'extractibles très bas, c'est-à-dire que très peu de particules appelées extractibles sortent de joints réalisés en COC élastomère, même lorsqu'ils sont en contact avec des gaz propulseurs du type HFA, qui sont particulièrement agressifs. En particulier, le COC élastomère ne présente pas d'acides gras en tant qu'extractibles, contrairement aux thermoplastiques élastomères et aux élastomères. Les extractibles existants avec le COC élastomère comportent principalement des antioxydants.

Le tableau ci-dessous démontre que le niveau d'extractibles est nettement inférieur pour le COC-E par rapport au TPE (thermoplastique élastomère), qui dans cet exemple comparatif, est formé d'un mélange de 50% de butyle et de 50% de polyéthylène :

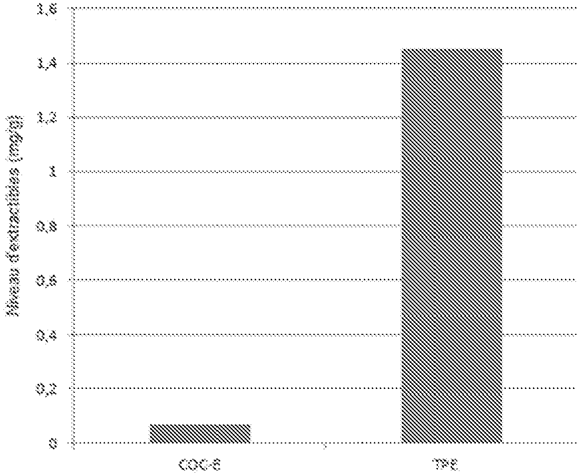

Les matériaux élastomères présentent pour leur part des niveaux d'extractibles encore nettement supérieurs, comme par exemple le nitrile qui a un niveau d'extractibles d'environ 14 mg/g ou l'EPDM qui a un niveau d'extractibles compris entre 1,4 et 5,3 mg/g.

Le COC élastomère présente également des propriétés barrière à la vapeur d'eau élevées, ainsi que des propriétés mécaniques qui sont tout à fait adaptées pour réaliser des joints de valve, notamment la dureté et le module de Young. Il présente également une bonne résistance à l'abrasion. Le COC élastomère présente également une bonne compatibilité avec les produits actifs de type pharmaceutique, car il n'y a pas de relarguage d'ions, pas de trace métallique, il comporte des surfaces hydrophobes, de sorte qu'il y a moins d'absorption, et enfin il est de conception aisée, c'est-à-dire qu'il est facile de réaliser des pièces de forme quelconque à partir de ce matériau.

Par exemple et de manière non limitative, le produit COC-E 140, commercialisé par la société TOPAS ADVANCED POLYMERS est un matériau adapté pour la présente invention.

D'autres matériaux sont aussi envisageables en alliage avec le COC élastomère, par exemple les élastomères thermoplastiques polyuréthane (TPU). En variante, on peut utiliser un matériau thermoplastique élastomère (TPE) à base oléfinique, par exemple en PP/SBC (mélange de polypropylène et de copolymère à blocs styrène), POE (éthylène octène), PEB (éthylène butène), EVA (éthylène vinyle acétate), PP/EPDM (mélange de polypropylène et d'éthylène propylène diène monomère). D'autres matériaux possibles comprennent : polyoléfine, polybutylène téréphtalate (PBT), polyoxyméthylène (POM), polyamide (PA), polycarbonate (PC), polyméthacrylate de méthyle (PMMA), polychlorure de vinyle (PVC), acrylonitrile butadiène styrène (ABS), polypropylène (PP), polyéthylène (PE), et des alliages de tous ces matériaux. D'autres matériaux possibles comprennent les alliages thermoplastiques (NBR/PP, butyl/PP, halobutyl/PP, HNBR/PE), les élastomères thermoplastiques préparés par vulcanisation dynamique, les élastomères thermoplastiques polyamide (PEBA, PEA, PEEA, PCEA), les élastomères thermoplastiques polyéther ester, les copolymères à blocs styrène (SBS, SIS, SEBS, SEPS, SEEPS, SIBS), et des mélanges de ces matériaux.

Pour éviter les retassures après moulage, la pièce monobloc 15 de la bague 10 comporte un ou plusieurs évidements axiaux 120 s'étendant autour de la périphérie de la bague, radialement à l'intérieur de la bride radiale 11 formant joint de col. De préférence, un seul évidement axial 120 périphérique est prévu, comme visible sur la figure 3. En variante, plusieurs évidements axiaux séparés par des nervures radiales pourraient être prévus.

L'évidement axial 120 peut s'ouvrir seulement d'un côté de la pièce monobloc 15, en particulier son côté axial supérieur, formant un évidement axial borgne, comme représenté sur les figures 1 à 4.

En variante, l'évidement axial peut être traversant, et s'ouvrir à la fois sur le côté axial supérieur et le côté axial inférieur de la pièce monobloc 15, comme représenté sur les figures 5 et 6.

La présence de cet évidement axial 120 peut poser des problèmes en raison de la souplesse du matériau réalisant la pièce monobloc 15.

Selon l'invention, ledit au moins un évidement axial 120 est au moins partiellement rempli par au moins un insert de remplissage 16, réalisé en un matériau plus rigide que ledit matériau de ladite pièce monobloc 15.

Dans les exemples des figures, un seul insert 16 remplit en totalité l'unique évidement axial 120 périphérique.

Comme visible sur les figures 1 et 2, l'évidement axial 120 peut avoir différentes profondeurs axiales, notamment au niveau desdites projections axiales 12.

Selon l'invention, cet insert 16 est surmoulé sur ladite pièce monobloc 15. Avantageusement, l'insert peut être réalisé en polypropylène, polyamide et/ou polyéthylène.

Dans l'exemple des figures 1 à 4, avec un insert 16 exposé seulement sur le côté supérieur de la pièce monobloc 15, ledit insert 16 n'est donc pas en contact direct avec le produit fluide contenu dans le réservoir. Il est alors avantageux de réaliser cet insert 16 en un matériau peu coûteux et facile à surmouler, tel que le polypropylène et/ou le polyéthylène. Dans cette variante, les projections axiales 12 et les vides 13 de la bague sont formés par la pièce monobloc 15.

Dans l'exemple des figures 5 et 6, avec un insert 16 traversant la pièce monobloc 15, ledit insert 16 est donc exposé des deux côtés de celle-ci, en étant en contact avec le produit fluide contenu dans le réservoir. Il est alors avantageux de réaliser cet insert 16 en un matériau présentant des propriétés d'absorption d'humidité, tel que le polyamide. Dans cette variante, les projections axiales 12 et les vides 13 de la bague sont formés par l'insert 16.

La figure 2 illustre un second mode de réalisation, dans lequel ladite première partie radialement interne 100 comporte une lèvre déformable coopérant avec une ouverture de remplissage 23 du corps de valve 21. Ceci permet de former un clapet qui s'ouvre lors du remplissage

Les avantages de la présente invention sont nombreux.

Ainsi, la possibilité de panacher deux matériaux différents permet d'apporter des fonctions spécifiques à chaque matériau.

L'utilisation d'un matériau sensiblement souple ou « mou », tel que le COC élastomère, permet de faire une bague formant joint de col joint, ce qui permet d'économiser une pièce et une étape d'assemblage.

Le COC élastomère assure une meilleure tenue de la bague sur le corps de valve, notamment lors du transport et/ou avant sertissage de la valve sur le réservoir.

L'utilisation d'un matériau sensiblement souple permet aussi de créer une partie déformable qui aide au remplissage avec une fonction clapet de la lèvre.

L'utilisation d'un matériau de remplissage plus rigide que le COC élastomère permet de former une bague plus rigide. Ceci facilite notamment sa manipulation lors de l'assemblage, et une meilleure tenue en étanchéité.

Un insert comportant du polyamide (ou d'autres matériaux ayant des propriétés similaires) permet de réaliser une absorption d'humidité.

La coloration du matériau de remplissage peut permettre de reconnaitre visuellement une valve en fonction de la couleur de la bague.

De plus, une bague avec les évidements remplis empêche le piégeage de formulation à l'intérieur de la bague, ce qui permet avantageusement une réduction de la formulation perdue.

L'invention est aussi avantageuse pour la fabrication de la bague, notamment son moulage, notamment par un gain de temps de cycle.

L'invention permet en outre une économie sur le coût de la matière en utilisant un matériau de remplissage moins cher que le COC élastomère.

De plus, la bague selon l'invention présente moins de déformations et donc un meilleur dimensionnel.

Bien que la présente invention ait été décrite en référence à des modes de réalisation de celle-ci représentés sur les dessins, il est entendu qu'elle n'est pas limitée à ces variantes, mais qu'au contraire un homme du métier peut y apporter toutes modifications utiles. En particulier, la structure de la valve peut être quelconque. De même, la forme du corps de valve et des ouvertures peut être différente de celle représentée. Il en est de même de la capsule ou bague de fixation qui peut être réalisée différemment, par exemple encliquetable ou vissable. De manière générale, toute modification est possible sans sortir du cadre de la présente invention tel que défini par les revendications annexées.

## Revendications

1. Bague (10) destinée à être disposée autour d'un corps de valve (21) d'une valve de distribution de produit fluide (20) montée, au moyen d'une capsule de fixation (50), tel qu'une capsule sertissable, sur un réservoir contenant du produit à distribuer, ladite bague (10) comportant:
- une pièce monobloc (15) comportant au moins une partie interne (100, 110) coopérant avec ledit corps de valve (21), une bride radiale (11) formant joint de col qui s'étend entre le col du réservoir et la capsule de fixation (50), et au moins un évidement axial (120) s'étendant au moins partiellement autour de la périphérie de ladite bague (10), radialement à l'intérieur de ladite bride radiale (11), ladite pièce monobloc (15) étant réalisée en un premier matériau sensiblement déformable, et
- au moins un insert de remplissage (16) remplissant au moins partiellement ledit au moins un évidement axial (120), ledit au moins un insert de remplissage (16) étant réalisé en un second matériau plus rigide que ledit premier matériau, ladite bague étant **caractérisée en ce que** ledit au moins un insert de remplissage (16) est surmoulé sur ladite pièce monobloc (15).

2. Bague selon la revendication 1, dans laquelle ladite pièce monobloc (15) comporte une première partie radialement interne (100) coopérant avec une partie du corps de valve (21) et une seconde partie interne (110) coopérant avec une autre partie du corps de valve (21).

3. Bague selon la revendication 2, dans laquelle ladite première partie radialement interne (100) comporte une lèvre déformable.

4. Bague l'une quelconque des revendications précédentes, dans laquelle ladite pièce monobloc (15) comporte un seul évidement axial (120) périphérique.

5. Bague selon la revendication 4, comportant un seul insert de remplissage (16) remplissant en totalité ledit évidement axial (120).

6. Bague selon l'une quelconque des revendications 1 à 3, dans laquelle ladite pièce monobloc (15) comporte une pluralité d'évidements axiaux (120) séparés par des nervures radiales.

7. Bague selon l'une quelconque des revendications précédentes, dans laquelle ladite pièce monobloc (15) comprend un copolymère élastomère ayant une température de transition vitreuse comprise entre - 10°C et 15 °C, une température de fusion cristalline comprise entre 50°C et 120°C, une cristallinité en poids comprise entre 5% et 40% et une teneur en norbornène comprise entre 2 et 15 mol%.

8. Bague selon la revendication 7, dans laquelle ladite pièce monobloc (15) comprend du COC élastomère.

9. Bague selon l'une quelconque des revendications précédentes, dans laquelle ledit second matériau comprend du polyamide, du polypropylène et/ou du polyéthylène.

10. Bague selon l'une quelconque des revendications précédentes, dans laquelle ledit au moins un insert de remplissage (16) est coloré différemment de ladite pièce monobloc (15).

11. Bague selon l'une quelconque des revendications précédentes, dans laquelle ledit au moins un évidement axial (120) est traversant, ledit au moins un insert (16) étant exposé sur les côtés axialement supérieur et inférieur de ladite pièce monobloc (15).

12. Bague selon l'une quelconque des revendications 1 à 10, dans laquelle ledit au moins un évidement axial (120) est borgne, ledit au moins un insert (16) étant exposé uniquement sur le côté axialement supérieur de ladite pièce monobloc (15).

13. Dispositif de distribution de produit fluide comportant un réservoir, contenant du produit à distribuer et un gaz propulseur, notamment du type HFA, et une valve aérosol (20), **caractérisé en ce qu'**il comporte une bague (10) selon l'une quelconque des revendications précédentes.

14. Dispositif selon la revendication 13, dans lequel ledit corps de valve (21) comporte au moins une ouverture (22) pour permettre le passage de produit du réservoir dans ladite valve (20), ladite première partie radialement interne (100) étant située au niveau du bord inférieur de ladite ouverture (22), en position d'utilisation inversée, avec la valve (20) disposée sous ledit réservoir.

## Patentansprüche

1. Ring (10) zur Anordnung um einen Ventilkörper (21) eines Ventils zur Ausgabe von Fluidprodukt (20), das mittels einer Befestigungskapsel (50), wie beispielsweise einer crimpbaren Kapsel, an einem Behälter befestigt ist, der auszugebendes Produkt enthält,
der Ring (10) aufweisend:
- ein einstückiges Teil (15) aufweisend mindestens einen inneren Abschnitt (100, 110), der mit dem Ventilkörper (21) zusammenwirkt, einen Radialflansch (11), der eine Kragendichtung bildet, die sich zwischen dem Kragen des Behälters und der Befestigungskapsel (50) erstreckt, und mindestens eine axiale Aussparung (120), die sich zumindest teilweise um den Umfang des Rings (10) radial innerhalb des Radialflanschs (11) erstreckt, wobei das einstückige Teil (15) aus einem ersten Material gebildet ist, das im Wesentlichen verformbar ist, und
- mindestens einen Fülleinsatz (16), der die mindestens eine axiale Aussparung (120) zumindest teilweise ausfüllt, wobei der mindestens eine Fülleinsatz (16) aus einem zweiten Material gebildet ist, das steifer als das erste Material ist, wobei der Ring **dadurch gekennzeichnet ist, dass** der mindestens eine Fülleinsatz (16) auf das einstückige Teil (15) aufgeformt ist.

2. Ring nach Anspruch 1, wobei das einstückige Teil (15) einen ersten, radial inneren Abschnitt (100), der mit einem Abschnitt des Ventilkörpers (21) zusammenwirkt, und einen zweiten, inneren Abschnitt (110), der mit einem anderen Abschnitt des Ventilkörpers (21) zusammenwirkt, aufweist.

3. Ring nach Anspruch 2, wobei der erste, radial innere Abschnitt (100) eine verformbare Lippe aufweist.

4. Ring einem der vorhergehenden Ansprüche, wobei das einstückige Teil (15) eine einzelne umlaufende axiale Aussparung (120) aufweist.

5. Ring nach Anspruch 4, aufweisend einen einzelnen Fülleinsatz (16), der die axiale Aussparung (120) vollständig ausfüllt.

6. Ring einem der Ansprüche 1 bis 3, wobei das einstückige Teil (15) eine Mehrzahl von axialen Aussparungen (120) aufweist, die durch radiale Rippen getrennt sind.

7. Ring nach einem der vorhergehenden Ansprüche, wobei das einstückige Teil (15) ein elastomeres Copolymer mit einer Glasübergangstemperatur zwischen -10 °C und 15 °C, einer kristallinen Schmelztemperatur zwischen 50 °C et 120 °C, einer Kristallinität zwischen 5 und 40 Gew.-% und einem Norbornengehalt zwischen 2 und 15 mol-% umfasst.

8. Ring nach Anspruch 7, wobei das einstückige Teil (15) elastomeres COC umfasst.

9. Ring nach einem der vorhergehenden Ansprüche, wobei das zweite Material Polyamid, Polypropylen und/oder Polyethylen umfasst.

10. Ring einem der vorhergehenden Ansprüche, wobei der mindestens eine Fülleinsatz (16) anders gefärbt ist als das einstückige Teil (15).

11. Ring nach einem der vorhergehenden Ansprüche, wobei die mindestens eine axiale Aussparung (120) durchgehend ist, wobei der mindestens eine Einsatz (16) an der axial oberen und unteren Seite des einstückigen Teils (15) freigelegt ist.

12. Ring nach einem der Ansprüche 1 bis 10, wobei die mindestens eine axiale Aussparung (120) blind ist, wobei der mindestens eine Einsatz (16) nur an der axial oberen Seite des einstückigen Teils (15) freigelegt ist.

13. Fluidprodukt-Ausgabevorrichtung aufweisend einen Behälter, der auszugebendes Produkt und ein Treibgas enthält, insbesondere vom HFA-Typ, und ein Sprühventil (20), **dadurch gekennzeichnet, dass** sie einen Ring (10) nach einem der vorhergehenden Ansprüche aufweist.

14. Vorrichtung nach Anspruch 13, wobei der Ventilkörper (21) mindestens eine Öffnung (22) aufweist, um den Durchtritt von Produkt von dem Behälter in das Ventil (20) zu gestatten, wobei sich der erste, radial innere Abschnitt (100) in umgedrehter Gebrauchsposition am unteren Rand der Öffnung (22) befindet, wobei das Ventil (20) unter dem Behälter angeordnet ist.

## Claims

1. A ring (10) for arranging around a valve body (21) of a fluid dispenser valve (20) that is mounted, by means of a fastener capsule (50), such as a crimpable capsule, on a reservoir containing fluid to be dispensed, said ring (10) comprising:
- a single piece (15) including at least one inner portion (100, 110) that co-operates with said valve body (21), a radial flange (11) that forms a neck gasket that extends between the neck of the reservoir and the fastener capsule (50), and at least one axial recess (120) that extends, at least in part, around the periphery of said ring (10), radially inwards from said radial flange (11), said single piece (15) being made out of a first material that is substantially deformable, and
- at least one filler insert (16) that fills said at least one axial recess (120), at least in part, said at least one filler insert (16) being made out of a second material that is more rigid than said first material, said ring being **characterized in that** said at least one filler insert (16) is over-molded on said single piece (15).

2. A ring according to claim 1, wherein said single piece (15) includes a first radially-inner portion (100) that co-operates with a portion of the valve body (21) and a second inner portion (110) that co-operates with another portion of the valve body (21).

3. A ring according to claim 2, wherein said first radially-inner portion (100) has a deformable lip.

4. A ring according to any preceding claim, wherein said single piece (15) includes a single peripheral axial recess (120).

5. A ring according to claim 4, including a single filler insert (16) that fills all of said axial recess (120).

6. A ring according to any one of claims 1 to 3, wherein said single piece (15) includes a plurality of axial recesses (120) that are separated by radial ribs.

7. A ring according to any preceding claim, wherein said single piece (15) comprises a copolymer elastomer having a glass transition temperature lying in the range -10°C to 15°C, a crystalline melting point lying in the range 50°C to 120°C, a crystallinity by weight lying in the range 5% to 40%, and a norbornene content lying in the range 2 mol% to 15 mol%.

8. A ring according to claim 7, wherein said single piece (15) comprises COC elastomer.

9. A ring according to any preceding claim, wherein said second material comprises polyamide, polypropylene, and/or polyethylene.

10. A ring according to any preceding claim, wherein said at least one filler insert (16) is colored in some other way from said single piece (15).

11. A ring according to any preceding claim, wherein said at least one axial recess (120) is a through recess, said at least one insert (16) being exposed on the top and bottom axially sides of said single piece (15).

12. A ring according to any one of claims 1 to 10, wherein said at least one axial recess (120) is a blind recess, said at least one insert (16) being exposed only on the top axially side of said single piece (15).

13. A fluid dispenser device comprising a reservoir containing fluid to be dispensed and a propellant gas, in particular of the HFA type, and an aerosol valve (20), the device being **characterized in that** it includes a ring (10) according to any preceding claim.

14. A device according to claim 13, wherein said valve body (21) includes at least one opening (22) so as to enable fluid to pass from the reservoir into said valve (20), said first radially-inner portion (100) being situated at the bottom edge of said opening (22), in the upsidedown working position, with the valve (20) arranged below said reservoir.
